Europäisches Patentamt

European Patent Office

Office européen des brevets

(19)

(11) Numéro de publication : **0 146 476**
**B1**

(12) **FASCICULE DE BREVET EUROPÉEN**

(45) Date de publication du fascicule du brevet :
**15.06.88**

(51) Int. Cl.⁴ : **G 03 B 35/08**

(21) Numéro de dépôt : **84402607.0**

(22) Date de dépôt : **14.12.84**

(54) **Dispositif de prise de vues stéréoscopiques à base variable.**

(30) Priorité : **19.12.83 FR 8320292**

(43) Date de publication de la demande :
**26.06.85 Bulletin 85/26**

(45) Mention de la délivrance du brevet :
**15.06.88 Bulletin 88/24**

(84) Etats contractants désignés :
**DE FR GB**

(56) Documents cités :
**WO-A-83 /017 19**
**GB-A- 888 317**
**GB-A- 2 114 395**
**US-A- 4 418 993**
**PATENTS ABSTRACTS OF JAPAN, vol. 5, no. 179 (E-82)[851], 17 novembre 1981**

(73) Titulaire : **THOMSON-CSF**
**173, Boulevard Haussmann**
**F-75379 Paris Cédex 08 (FR)**

(72) Inventeur : **Favreau, Michel**
**THOMSON-CSF SCPI 173, bld Haussmann**
**F-75379 Paris Cedex 08 (FR)**
Inventeur : **Chauvierre, Marc**
**THOMSON-CSF SCPI 173, bld Haussmann**
**F-75379 Paris Cedex 08 (FR)**

(74) Mandataire : **Turièque, Clotilde et al**
**THOMSON-CSF SCPI 19, avenue de Messine**
**F-75008 Paris (FR)**

Jouve, 18, rue St-Denis, 75001 Paris, France

**0 146 476**

## Description

L'invention concerne la prise de vues stéréoscopiques, pour le cinéma ou la télévision, dans le cas où un ou deux objectifs à distance focale variable, sont utilisés.

Il est connu de réaliser des prises de vues stéréoscopiques avec une distance variable entre les deux points de prise de vues, cette distance étant appelée « base », et avec un angle variable entre les deux directions de vues, cet angle étant appelé la « convergence ». La base est réglée manuellement, selon des formules empiriques, en fonction de la distance de mise au point et de la distance focale du ou des objectifs employés. Le cadreur peut tenir compte aussi de la profondeur de champ, pour améliorer l'effet de relief, dont l'appréciation reste subjective. La convergence est réglée, manuellement, pour que les deux directions de vue convergent sur le plan le plus intéressant du sujet, mais ce réglage est, lui aussi, assez subjectif.

Lorsque les objectifs utilisés ont une distance focale fixe, le réglage qui est modifié le plus souvent est le réglage de mise au point, donc c'est celui qui va amener le plus souvent le cadreur à modifier la base et la convergence. Mais lorsque les objectifs ont une distance focale variable, autrement dit sont des « zooms », il faut en outre modifier le réglage de la base et de la convergence, lorsqu'on fait varier la distance focale.

Il est bien connu que lorsqu'une prise de vue sans relief est réalisée avec un télé-objectif, ou avec un grand angulaire, les perspectives restituées paraissent fausses par rapport aux perspectives naturelles. Avec un télé-objectif les différents plans de l'image semblent être plus proches les uns des autres. Au contraire, avec un grand angulaire les différents plans de l'image semblent être plus éloignés les uns des autres. Dans le cas d'une prise de vues stéréoscopiques et d'une restitution d'images stéréoscopiques ces distorsions des perspectives sont encore plus gênantes pour l'observateur si la base est inchangée.

La distorsion des perspectives provoque une dégradation de l'effet de relief perçu par l'observateur, puisqu'il conserve le même angle de vue, lors de la restitution de l'image, quel que soient les conditions dans lesquelles la prise de vue a été réalisée. L'observateur perçoit un sous-relief dans le cas où la prise de vues a été faite avec des objectifs à grande distance focale, et perçoit un sur-relief dans le cas où la prise de vues a été réalisée par des objectifs à faible distance focale.

Il est connu de remédier à la dégradation de l'effet de relief, dans le cas de l'utilisation d'objectifs à distances focales fixes, en réglant manuellement la distance entre les deux points de prise de vues selon des formules empiriques fonction de la distance focale des objectifs utilisés, afin d'augmenter ou de diminuer l'impression de relief selon la compensation à réaliser. Ce réglage peut être fait manuellement et selon les mêmes formules dans le cas de l'utilisation de zooms. Cependant, pour le cinéma et la télévision, ces réglages atteignent une complexité trop grande pour être correctement exécutés par le cadreur, lorsqu'il s'agit de suivre un sujet qui se déplace.

La demande de brevet GB-A-888 317 décrit un dispositif réglant automatiquement la convergence d'un couple de caméras ayant des objectifs à distance focale fixe. Ce dispositif est mécanique et modifie la convergence en fonction seulement du réglage de mise au point des deux objectifs.

La demande de brevet GB-A-2 114 395 décrit un dispositif de prise de vues stéréoscopiques comportant des mécanismes permettant de télécommander le réglage de la convergence et le réglage de la base d'un couple de caméras. Ces réglages sont télécommandés mais ne sont pas réalisés automatiquement. Il faut donc un opérateur pour les télécommander. Ces réglages sont commandés en fonction de la distance entre les caméras et l'objet observé, mais pas en fonction de la distance focale des objectifs, bien que l'utilisation de zooms soit mentionnée.

Le dispositif selon l'invention comporte une mémoire de programmes et des asservissements de position pour régler automatiquement, selon des lois prédéterminées, la base et convergence, en fonction de la distance de mise au point et de la distance focale principalement, pour faciliter l'utilisation du ou des zooms, pour des prises de vues stéréoscopiques de cinéma ou de télévision.

Selon l'invention, un dispositif de prise de vues stéréoscopiques à base variable, comportant des moyens pour prendre des vues à partir d'un premier et d'un second point de vue, écartés d'une distance variable B appelée base, selon deux directions de vues faisant un angle θ appelé convergence, ces moyens comportant :

— au moins un objectif à distance focale variable ;

— un dispositif de commande de l'objectif, pour commander le réglage de sa distance focale, le réglage de sa mise au point, et le réglage de son diaphragme ;

— un dispositif d'asservissement de la convergence et d'asservissement de la base ;

— un dispositif de commande du dispositif d'asservissement pour déterminer une valeur de convergence et une valeur de base, en fonction du réglage de mise au point de l'objectif ;

est caractérisé en ce que le dispositif de commande du dispositif d'asservissement détermine la valeur de convergence et la valeur de base en fonction aussi du réglage de la distance focale de l'objectif, selon une loi prédéterminée stockée dans une mémoire, la valeur du réglage de la mise au point et la valeur du réglage de la distance focale étant fournies par le dispositif de commande de l'objectif.

L'invention sera mieux comprise et d'autres détails apparaîtront à l'aide de la description ci-dessous et des figures l'accompagnant :

2

— la figure 1 représente le schéma synoptique d'un premier exemple de réalisation du dispositif selon l'invention ;

— la figure 2 représente une autre vue de ce premier exemple ;

— la figure 3 représente une vue en coupe d'une partie de ce premier exemple ;

— les figures 4, 5 et 6 représentent des schémas synoptiques de trois autres exemples de réalisation.

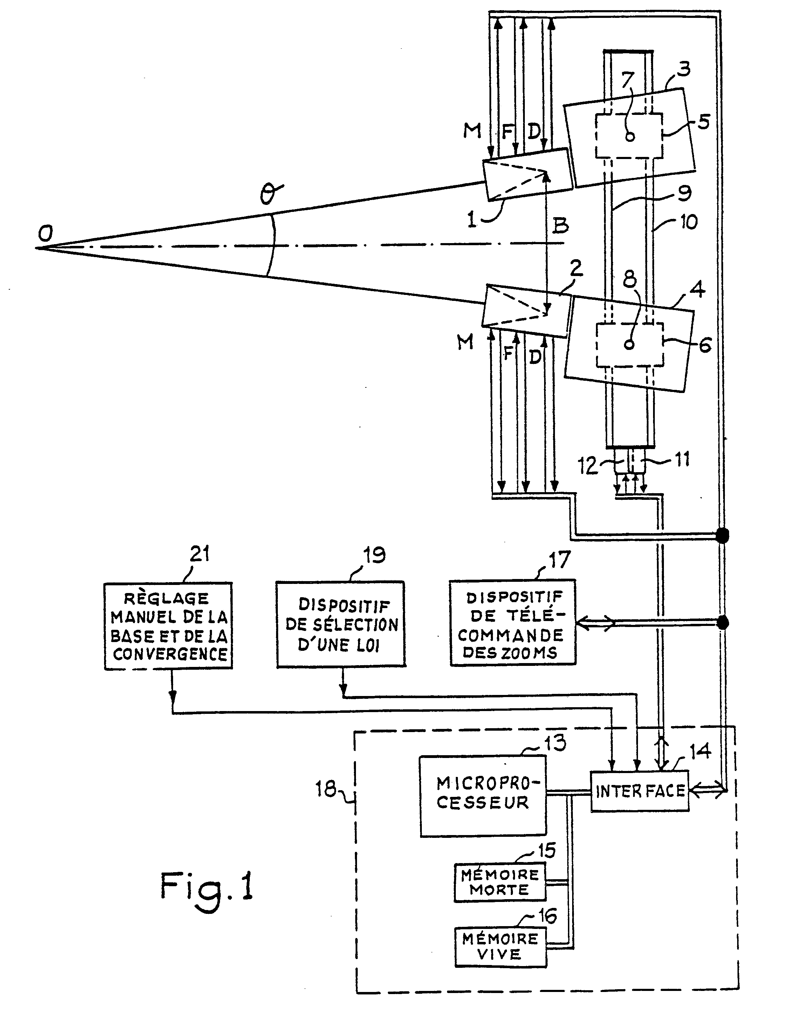

L'exemple de réalisation représenté sur la figure 1 comporte une partie mécanique et optique, et une partie électronique. La partie mécanique et optique comporte deux objectifs zooms indentiques 1 et 2, deux caméras de télévision 3 et 4, deux axes de rotation 7 et 8 sur lesquels sont fixées respectivement les caméras 3 et 4, deux supports 5 et 6 dans lesquels tournent les axes 7 et 8, deux guides 9 et 10 sur lesquels glissent les supports 5 et 6, et deux moteurs 11 et 12. Les deux caméras 3 et 4 prennent chacune des vues d'un objet O placé devant elles.

Dans cet exemple, les deux directions de vues sont constituées par les axes optiques des zooms 1 et 2, qui convergent vers le point O en faisant un angle θ. Dans cet exemple, la base, qui est la distance entre les deux points de prise de vues, est égale à la distance B séparant les centres optiques des zooms 1 et 2. Un dispositif mécanique permet d'asservir la convergence et la base à des signaux de commande déterminés en fonction du réglage de mise au point M, du réglage de la distance focale F, et du réglage de diaphragmes D des zooms 1 et 2.

Les caméras 3 et 4 peuvent tourner autour d'un axe vertical, 7 et 8 respectivement, pour régler la convergence des directions de vues dans un plan horizontal. Les axes 7 et 8 sont montés sur les supports 5 et 6 qui peuvent se déplacer horizontalement sur les guides 9 et 10 qui sont constitués de deux tiges parallèles entre elles, horizontales, et perpendiculaires aux plans de symétrie des directions de vues. Le déplacement des supports 5 et 6 permet de régler la base B. Les moteurs 11 et 12 permettent d'assurer ce déplacement ainsi que la rotation des axes 7 et 8, selon un mécanisme décrit plus loin.

La partie électronique de cet exemple de réalisation comprend un dispositif 17 de télécommande des zooms, un dispositif 18 de commande du dispositif d'asservissement de la convergence et d'asservissement de la base, un dispositif 19 de sélection d'une loi pour ces asservissements, et un dispositif 21 de réglage manuel de la base et de la convergence. Les caméras de télévision professionnelle sont équipées d'un zoom dont le réglage M de la mise au point, le réglage F de la distance focale, et le réglage D du diaphragme sont réalisés par une télécommande électrique constituée d'un asservissement de position qui recopie la position d'un bouton manipulé par le cadreur. Dans cet exemple, le dispositif 17 est manipulé par le cadreur pour fournir aux zooms 1 et 2 trois consignes de réglage M, F, D sous la forme de trois tensions, et ces consignes sont appliquées en même temps à une entrée du dispositif 18. Réciproquement, trois capteurs de positions situés dans chacun des zooms 1 et 2, et non représentés sur les figures, fournissent respectivement trois tensions au dispositif 17 pour contrôler les réglages effectués.

Les dispositifs 21 et 19 ont chacun une sortie reliée respectivement à une entrée du dispositif 18. Le dispositif 19 permet au cadreur de sélectionner une loi d'asservissement parmi quatre lois prédéterminées, ou bien un réglage manuel, par des boutons de commande du dispositif 21.

Le dispositif 18 comporte un microprocesseur 13 relié par un bus d'adresse et de donnée à une mémoire morte 15, à une mémoire vive 16, et à une interface 14. L'interface 14 possède deux entrées reliées respectivement aux sorties des dispositifs 19 et 21 ; une entrée multiple reliée à une entrée-sortie du dispositif 17 pour recevoir les valeurs des consignes des réglages M, F, D ; et une entrée-sortie. Cette entrée-sortie, d'une part fournit des signaux de commande aux moteurs 11 et 12, et d'autre part reçoit des signaux fournis par des capteurs de positions traduisant la position des supports 5 et 6 et des axes de rotation 7 et 8, ces capteurs n'étant pas représentés sur les figures.

Le dispositif 19 de sélection d'une loi, permet de sélectionner une parmi quatre lois permettant de déterminer une valeur de la convergence et une valeur de la base en fonction des valeurs des réglages M, F et D. Trois de ces lois sont figées et sont stockées dans la mémoire morte 15. L'une d'elles, qui est la plus utilisée en pratique, correspond à une restitution du relief la plus naturelle possible dans toutes les conditions de prises de vues. Par exemple, cette loi peut être déduite des formules énoncées par le Général Hurault dans son ouvrage intitulé « Problèmes Techniques de la Photographie Stéréoscopique » publié par l'Institut Géographique National en 1964. Cet ouvrage donne, à la page 119, une formule permettant de déterminer la base d'une prise de vue stéréoscopique. Cette formule est établie en considérant qu'une différence de paralaxe angulaire de 3° entre les premiers plans et les arrière-plans peut être considérée comme acceptable pour la quasi-totalité des observateurs. Lorsque cette valeur de différence de paralaxe angulaire est dépassée le fusionnement binoculaire n'est plus possible dans tout l'espace reconstitué en vision artificielle dans un stéréoscope ou sur un écran, sauf pour certains observateurs ayant beaucoup d'entraînement pour faire varier la convergence de leur ligne de fixation en laissant leur accommodation constante. L'auteur en déduit la formule suivante, qui donne la valeur de la base B en fonction de la distance $D_1$ entre la caméra et le premier plan observé et de la distance $D_2$ de la distance entre la caméra et le second plan observé, ces valeurs étant exprimées en mètres :

$$B = 50 \cdot D_1 \cdot D_2/(D_2 - D_1)$$

La démonstration de cette formule est faite en prenant pour hypothèse que la différence de paralaxe

**0 146 476**

angulaire de 3° permet d'obtenir un effet de relief important mais pas fatiguant pour un observateur moyen et que la distance focale de l'appareil de prise de vue est identique à la distance focale d'un stéréoscope utilisé pour la restitution des vues. Une formule analogue peut être démontrée en tenant compte de la distance focale $f_p$ de l'appareil de prise de vue et de la distance focale $f_s$ du stéréoscope :

$$B = 50 \cdot D_1 \cdot D_2/(D_2 - D_1) \times f_p//f_s$$

Dans le cas d'une prise de vue avec des objectifs à distance focale variable la valeur $f_p$ varie mais aussi les valeurs $D_1$ et $D_2$ car la profondeur de champ est déterminée par la distance focale et par l'ouverture des objectifs de prise de vues. La distance focale $f_s$ du stéréoscope est une valeur constante qui est remplacée par une valeur équivalente dans le cas d'une restitution des images par une projection sur un écran diffusant ou sur un écran de télévision. La loi stockée dans la mémoire morte 15 est donc de la forme :

$$B = [A \cdot D_1(M,F,D) \cdot D_2(M,F,D)]/[D_2(M,F,D) - D_1(M,F,D)] \times F$$

$D_1(M,F,D)$ et $D_2(M,F,D)$ sont respectivement la distance entre la caméra et le premier plan net et la distance entre la caméra et le dernier plan net, et sont déterminées en fonction des valeurs M, F et D par un calcul classique en optique ou bien sont lues dans des tables stockées en mémoire morte après avoir été calculées par les formules classiques de l'optique ou bien après avoir été déterminées expérimentalement. Le coefficient A est un coefficient constant qui est déterminé expérimentalement, qui dépend de l'importance de l'effet de relief souhaité et qui dépend des conditions d'observation des images restituées : les dimensions de l'écran et la distance des spectateurs par rapport à cet écran. Deux autres lois prédéterminées sont stockées dans la mémoire morte 15 et correspondent à un coefficient A de valeur double et à un coefficient A de valeur moitié, pour obtenir respectivement un effet de sur-relief ou pour obtenir un effet de sous-relief.

Une quatrième loi peut être stockée dans la mémoire vive 16 par un procédé d'apprentissage consistant à faire des essais de prises de vues avec réglage manuel par le dispositif 21, pendant des répétitions de la scène, puis à stocker les valeurs de la convergence et de la base en fonction de la valeur de l'un des paramètres, par exemple le réglage M de la mise au point. La fonction d'apprentissage du dispositif 18 est commandée par le cadreur en utilisant des commandes manuelles intégrées au dispositif de réglage 21. Lors de la prise de vues effective le cadreur sélectionne la quatrième loi par le dispositif de sélection 19 et il agit sur les réglages des zooms 1 et 2 sans se préoccuper de l'effet de relief à obtenir en agissant sur la base et la convergence, le dispositif 18 de commande des asservissements réalise cet effet en fonction de la valeur de réglage de la mise au point. La vitesse de réalisation de l'effet peut être beaucoup plus rapide que la vitesse à laquelle l'apprentissage a été réalisé, sans difficulté pour le cadreur.

Le travail du cadreur est aussi facile que dans le cas d'une caméra classique dès lors qu'il a sélectionné une des lois déterminant automatiquement la convergence et la base. Il ne s'occupe que de commander les réglages classiques de mise au point, de distance focale et de diaphragme. Cette simplification de son travail lui permet de réaliser aisément des prises de vues stéréoscopiques de bonne qualité sur un objet en mouvement, notamment quand celui-ci se déplace en direction des caméras.

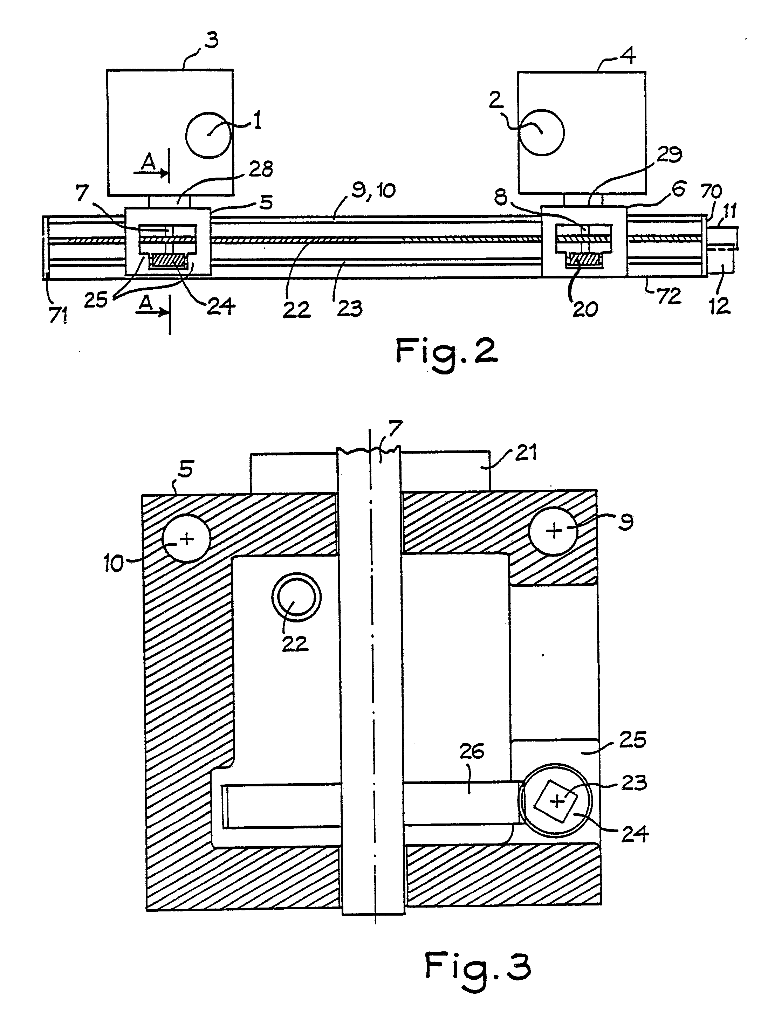

La figure 2 représente une vue de face d'une partie de ce premier exemple de réalisation, montrant de face les caméras 3 et 4 avec leurs zooms 1 et 2, et l'ensemble du dispositif d'asservissement de la base et d'asservissement de la convergence. Les caméras 3 et 4 pivotent dans le plan horizontal en étant entraînées par les axes verticaux 7 et 8 et en s'appuyant sur des roulements à bille 21 et 28 posés sur la face supérieure des supports 5 et 6, ces supports 5 et 6 ayant chacun la forme d'une cage cubique.

La figure 3 représente une coupe selon un plan vertical AA du support 5. Le support 6 est analogue. Le fonctionnement de ce dispositif mécanique sera mieux compris en se référant simultanément aux figures 2 et 3. Les supports 5 et 6 sont guidés horizontalement par les guides 9 et 10 qui sont des tiges cylindriques parallèles et horizontales. Les supports 5 et 6 sont déplacés le long des guides 9 et 10 par un arbre 22 parallèle aux guides 9 et 10, de même longueur, et portant un pas de vis différent sur une première et une seconde moitié de sa longueur. L'arbre 22 traverse deux parois opposées de chacun des supports 5 et 6 par des trous filetés qui assurent l'entraînement des supports dans deux directions opposées lorsque l'arbre 22 est en rotation. Cette rotation est assurée par le moteur 11.

Le pivotement de l'axe vertical 7 est assuré par une roue dentée 26 fixée sur cet arbre et engrenant dans une vis sans fin 24. La vis sans fin 24 comporte un trou de section carrée le long de son axe de symétrie, dans lequel passe un arbre 23, de même section, qui est horizontal, parallèle aux guides 9 et 10, de même longueur. L'arbre 23 est mû par le moteur 12, il entraîne la vis sans fin 24, pour provoquer la rotation de l'arbre 7 supportant la caméra 3.

Une vis sans fin 20 dont l'hélice est de sens opposé à celle de la vis sans fin 24, est entraînée en rotation par le même arbre 23 pour entraîner une roue dentée, non représentée, identique à la roue 26 et solidaire de l'arbre de rotation 8, dans un sens opposé au sens de rotation de l'arbre 7. Les vis sans fin 24 et 20 sont solidaires en translation des supports 5 et 6 parce qu'elles sont maintenues par des bossages 25 empêchant le déplacement des vis sans fin 24 et 20 parallèlement aux guides 9 et 10 lorsqu'elles

exercent un effort sur les roues dentées, telles que la roue 26, pour faire pivoter les caméras.

Les vis sans fin 20 et 24 n'étant pas immobilisées en translation sur l'arbre 23 elles n'empêchent pas la translation des supports 5 et 6 sous l'action de l'arbre 22. Les guides 9, 10, les arbres 22, 23, et les moteurs 11, 12 sont montés sur des flasques 70 et 71, reliés par un fond 72. Ce dispositif mécanique simple permet de réaliser le réglage de la base et le réglage de la convergence sans avoir à doubler les dispositifs d'asservissement réglant la position des caméras. Dans cet exemple de réalisation la valeur minimale de la base correspond à un rapprochement des caméras tel que leurs parois soient en contact. Il est avantageux de prévoir leur construction de façon telle que les zooms 1 et 2 sont montés le plus près possible des parois qui vont être en contact lorsque la base est minimale.

Lorsque les caméras sont très encombrantes le déplacement des caméras par un dispositif d'asservissement de la convergence et d'asservissement de la base nécessite un dispositif robuste et puissant. Il est alors avantageux d'utiliser des dispositifs optiques supplémentaires permettant de conserver ces caméras immobiles, par rapport au dispositif réalisant un asservissement de la base et de la convergence.

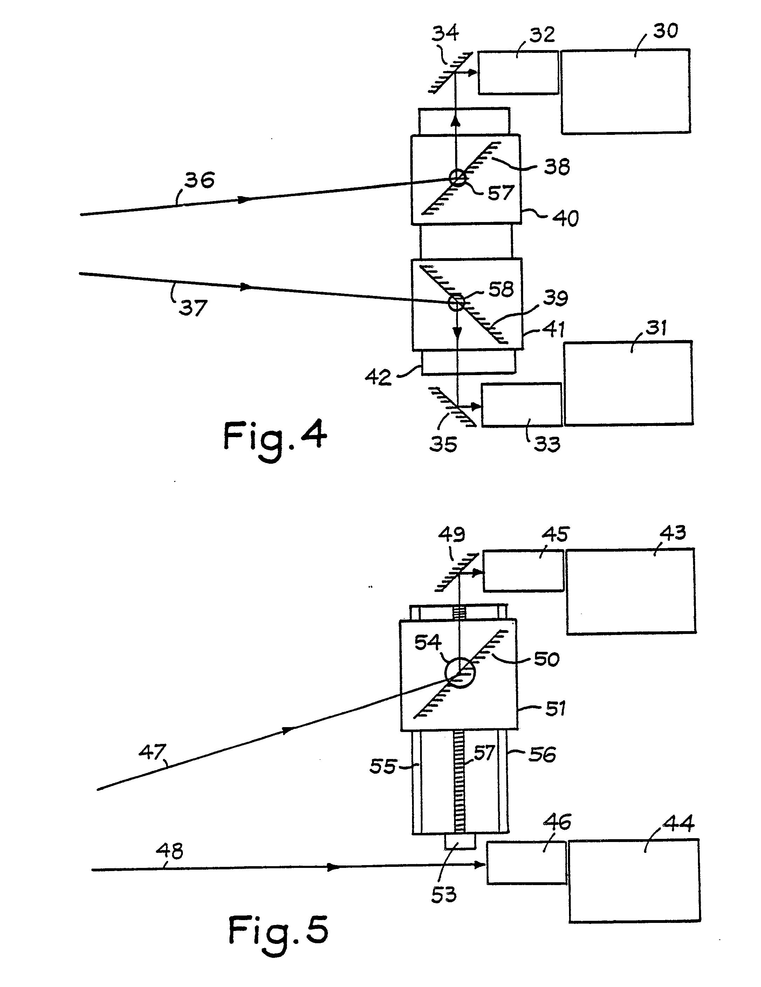

Sur la figure 4 est représenté un deuxième exemple de réalisation du dispositif selon l'invention, comprenant deux caméras de télévision 30 et 31 munies de zooms 32 et 33, fixes par rapport à un dispositif 42 d'asservissement de la base et de la convergence analogue au dispositif représenté sur les figures 1 à 3, mais où au lieu de déplacer les caméras 30 et 31 les supports 40 et 41 déplacent des miroirs plans 38 et 39. Ces miroirs sont verticaux et tournent autour d'axes verticaux 57 et 58 analogues aux axes 7 et 8. Quand la convergence est nulle les miroirs 38 et 39 font un angle de 45° par rapport au plan de symétrie des directions de vues. Les caméras 30 et 31 sont disposées symétriquement par rapport à ce plan de symétrie et reçoivent la lumière venant de deux directions de vues 36 et 37 par l'intermédiaire des miroirs 57 et 58 respectivement et de deux miroirs de renvoi 34 et 35 respectivement. Les miroirs 34 et 35 sont des miroirs plans verticaux qui sont parallèles aux miroirs 38 et 39 lorsque la convergence est nulle. Dans cet exemple la convergence est déterminée par l'angle de rotation des miroirs 38 et 39, qui tournent en sens opposé.

Dans les exemples précédents les chemins optiques suivis par la lumière provenant des deux directions de vues sont symétriques par rapport au plan de symétrie de ces deux directions, ils sont donc identiques. La figure 5 représente un troisième exemple de réalisation où les deux chemins optiques ne sont pas rigoureusement de la même longueur. Ceci n'est pas gênant si les prises de vues ne sont pas réalisées très près de l'objet, car la profondeur de champ permet d'avoir deux vues aussi nettes l'une que l'autre et la différence de grossissement est peu importante. Il est possible aussi de rallonger artificiellement le chemin optique le plus court par un dispositif optique dont la réalisation est à la portée de l'homme de l'art, ou bien de modifier la distance focale de l'un des zooms pour un coefficient constant appliqué à la valeur de consigne F de réglage de sa distance focale.

Sur la figure 5, deux caméras de télévision 43 et 44, munies de zooms 45 et 46, sont disposées de façon telle que leurs axes optiques sont parallèles et horizontaux. La caméra 44 reçoit directement la lumière correspondant à une première direction de vue 48. La caméra 43 reçoit la lumière correspondant à une seconde direction de vue 47 par l'intermédiaire d'un miroir mobile 50 et d'un miroir de renvoi 49. Le miroir mobile 50 est un miroir plan vertical tournant autour d'un axe vertical sous l'action d'un moteur 54 porté par un support 51 se déplaçant horizontalement sur des guides rectilignes 55 et 56 sous l'action d'un arbre fileté 57 mû par un moteur 53. Des capteurs de position non représentés mesurent la position du miroir mobile 50 et du support 51.

Le déplacement horizontal du support 51 déplace le miroir 50 dans le plan des axes optiques des caméras 43 et 44 et perpendiculairement à ceux-ci pour faire varier la base. La rotation du miroir 50 permet de faire varier la convergence. Quand la convergence est nulle les miroirs 49 et 50 sont parallèles et font chacun un angle de 45° par rapport aux axes optiques des caméras 43 et 44. La partie électronique du dispositif est analogue à celle du premier exemple de réalisation.

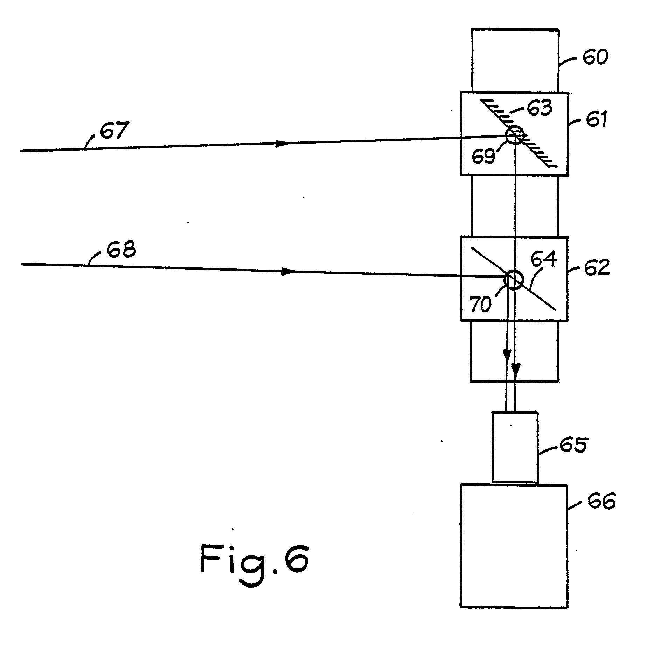

Le dispositif selon l'invention peut être appliqué à la prise de vues stéréoscopiques selon un procédé mettant en œuvre une seule caméra et un seul objectif. La figure 6 représente un quatrième exemple de réalisation, mettant en œuvre le procédé connu des anaglyphes, et comportant une seule caméra 66 munie d'un zoom 65 recevant la lumière provenant de deux directions de vues distinctes 67 et 68 respectivement par l'intermédiaire d'un miroir de renvoi 63 et d'une lame dichroïque 64 placés sur l'axe optique de la caméra 66. Le miroir 63 est un miroir plan vertical tournant autour d'un axe vertical sous l'action d'un axe 69 analogue à l'axe 7 du premier exemple de réalisation. La lame dichroïque 64 est plane et verticale, et elle tourne autour d'un axe vertical sous l'action d'un axe 70 analogue à l'axe 8 du premier exemple. Les axes 69 et 70 sont portés par des supports 61 et 62 analogues aux supports 5 et 6 du premier exemple, mûs par un dispositif 60 d'asservissement de la base et d'asservissement de la convergence, analogue à celui décrit dans le premier exemple. L'axe optique de la caméra 66 est dans le prolongement de la direction de translation des supports 61 et 62. Lorsque la convergence est nulle le miroir 63 et la lame 64 sont parallèles et font un angle de 45° par rapport à l'axe optique de la caméra 66. Cette dernière est fixe par rapport au dispositif d'asservissement 60.

L'invention ne se limite pas aux exemples de réalisation décrits ci-dessus, de nombreuses variantes sont à la portée de l'homme de l'art car il existe de nombreux dispositifs optiques permettant de réaliser des prises de vues avec une base variable et une convergence variable, et ces dispositifs sont en général

**0 146 476**

faciles à adapter pour asservir les réglages de la base et de la convergence, par un dispositif analogue à celui décrit pour le premier exemple.

Il est possible de réaliser ces asservissements différemment, par exemple en employant des moteurs pas à pas, commandés par un nombre déterminé d'impulsions de courant, ce qui évite d'employer des capteurs de position.

L'invention s'applique à la prise de vues stéréoscopiques pour le cinéma et la télévision en relief.

**Revendications**

1. Dispositif de prise de vues stéréoscopiques à base variable, comportant des moyens (1 à 4) pour prendre des vues à partir d'un premier et d'un second point de vue, écartés d'une distance variable B appelée base, selon deux directions de vues faisant un angle θ appelé convergence, ces moyens (1 à 4) comportant :

— au moins un objectif (1, 2) à distance focale variable ;

— un dispositif (17) de commande de l'objectif (1, 2), pour commander le réglage de sa distance focale, le réglage de sa mise au point, et le réglage de son diaphragme ;

— un dispositif (7 à 12) d'asservissement de la convergence et d'asservissement de la base ;

— un dispositif (18) de commande du dispositif d'asservissement (7 à 12), pour déterminer une valeur de convergence et une valeur de base, en fonction du réglage de mise au point de l'objectif (1, 2) ;

caractérisé en ce que le dispositif (18) de commande du dispositif d'asservissement (7 à 12) détermine la valeur de convergence et la valeur de base en fonction aussi du réglage de la distance focale de l'objectif (1, 2), selon une loi prédéterminée stockée dans une mémoire (15, 16), la valeur du réglage de la mise au point et la valeur du réglage de la distance focale étant fournies par le dispositif (17) de commande de l'objectif (1, 2).

2. Dispositif selon la revendication 1, caractérisé en ce que la mémoire (15, 16) du dispositif (18) de commande du dispositif d'asservissement (7 à 12) comporte une mémoire morte (15) pour stocker : une loi connue permettant d'obtenir un effet de relief naturel ; une loi connue permettant d'obtenir un effet de sur-relief ; et une loi connue permettant d'obtenir un effet de sous-relief.

3. Dispositif selon la revendication 1, caractérisé en ce que la mémoire (15, 16) du dispositif (18) de commande du dispositif d'asservissement (7 à 12) comporte en outre une mémoire vive (16) pour stocker une loi correspondant à un effet particulier, cette loi étant déterminée en faisant varier manuellement la convergence et la base pendant une répétition et en écrivant dans cette mémoire vive (16) les valeurs de la convergence et les valeurs de la base correspondant aux valeurs de l'un des réglages de l'objectif (1, 2).

4. Dispositif selon la revendication 1, caractérisé en ce que le dispositif d'asservissement de la convergence et d'asservissement de la base comporte :

— deux supports (5, 6) coulissant sur des guides (9, 10) horizontaux et perpendiculaires aux deux directions de vue quand la convergence est nulle, et entraînés dans deux directions opposées par deux pas de vis opposés, situés respectivement sur deux moitiés d'un premier arbre (22), parallèle aux guides (9, 10) et de même longueur que ceux-ci ;

— deux axes verticaux (7, 8) supportant respectivement deux dispositifs de prise de vues (3, 4) ; ces axes étant montés en rotation respectivement sur les deux supports (5, 6), et portant chacun une roue dentée (26) engrenée dans une vis sans fin (20, 24) quii est solidaire respectivement des supports (5, 6) dans leur translation le long des guides (9, 10) et solidaire en rotation avec un second arbre (23) parallèle aux guides (9, 10) et de même longueur ;

— deux moteurs (11, 12) faisant tourner le premier et le second arbre (22, 23), pour régler respectivement la base et la convergence.

5. Dispositif selon la revendication 4, caractérisé en ce que les deux dispositifs de prise de vues sont constitués de deux caméras (1, 4) munies chacune d'un objectif (1, 2) à distance focale variable, fixées respectivement sur les deux axes verticaux (7, 8), leurs axes optiques étant horizontaux.

6. Dispositif selon la revendication 4, caractérisé en ce que les deux dispositifs de prise de vues sont constitués de deux miroirs (38, 39) plans, verticaux, symétriques par rapport au plan de symétrie des vues, et faisant un angle de 45° avec ce plan, quand la convergence est nulle ;

et en ce qu'il comporte en outre deux caméras (30, 31) fixes par rapport aux guides (9, 10), disposées symétriquement par rapport au plan de symétrie des directions des vues, et couplées optiquement aux miroirs (38, 39) respectivement.

7. Dispositif selon la revendication 1, caractérisé en ce que le dispositif d'asservissement de la base et de la convergence comporte :

— un miroir mobile (50), plan, vertical, mû autour d'un axe vertical par un moteur (54), pour régler la convergence ;

— un support (51) coulissant sur deux guides rectilignes (55 et 56), portant le moteur (54) et le miroir mobile (50), entraîné en translation par un arbre (57) munis d'un pas de vis et parallèle aux guides (55, 56) et de même longueur ;

— un moteur (53) entraînant l'arbre (57) pour régler la base ;

et en ce qu'il comporte une première et une seconde caméra (43, 44) fixes par rapport aux guides (55,

6

56), la première prenant des vues directement, et la seconde prenant des vues par l'intermédiaire du miroir mobile (50) et d'un miroir de renvoi (49) fixe, et parallèle au miroir mobile (50) quand la convergence est nulle.

8. Dispositif selon la revendication 4, caractérisé en ce que les deux dispositifs de prise de vues comportent :
— un miroir (63) et une lame dichroïque (64), plans et verticaux, faisant un angle de 45° par rapport à deux directions de vues (67, 68) quand la convergence est nulle et réfléchissant dans une même direction la lumière reçue selon les deux directions de vues, la lumière réfléchie par le miroir (63) traversant la lame (64) ;
— et en ce qu'il comporte une caméra (66), unique et fixe, et recevant dans un objectif unique (65) la lumière réfléchie par le miroir (63) et la lame dichroïque (64).

## Claims

1. A stereoscopic viewing device with a variable base comprising means (1 to 4) for viewing as from a first and a second viewing point spaced by a variable distance B termed the base in two directions of view making an angle of $\theta$ termed convergence, said means (1 to 4) comprising :
— at least one variable focal length objective (1 and 2) ;
— a device (17) for controlling the objective (1 and 2) for controlling the setting of its focal length, the setting of the focus and the setting of its diaphragm ;
— a device (7 to 12) for the automatic control of the convergence and the automatic control of the base ;
— a device (18) for the operation of the automatic control device (7 to 12) in order to determine a value for the convergence and a value of the base as a function of the setting of the focussing of the objective (1 and 2) ;
characterized in that the device (18) for the operation of the automatic control device (7 to 12) determines the value of the convergence and of the base as a function of the setting of the focal length of the objective (1 and 2) as well in accordance with data stored in a memory (15 and 16), the setting for the focus of the objective and the value for the setting of the focal length being provided by the device (17) for the operation of the objective (1 and 2).

2. The device as claimed in claimed 1, characterized in that the memory (15 and 16) of the device (18) for the operation of the automatic control device (7 to 12) comprises a ROM (15) for storing : a known relationship in order to obtain a natural relief effect ; a known law making it possible to obtain a superrelief ; and a known law making it possible to obtain a subrelief effect.

3. The device as claimed in claim 1, characterized in that the memory (15 and 16) of the device (18) for the operation of the automatic control device (7 to 12) furthermore comprises a RAM (16) to store a law corresponding to a special effect, this law being ascertained by manually varying the convergence and the base during a repetition and writing to this RAM (16) the values for convergence and the values for the base corresponding to the values of one of the settings of the objective (1 and 2).

4. The device as claimed in claim 1, characterized in that the device for the automatic control of the convergence and of the base comprises :
— two supports (5 and 6) sliding on guides (9 and 10) which are horizontal and perpendicular to the two viewing directions when the convergence is zero and which are driven in two opposite directions by two screws of opposite hand, situated respectively on two halves of a first shaft (22), parallel to the guides (9 and 10) and having an identical length to same,
— two vertical shafts (7 and 8) respectively supporting two viewing devices (3 and 4) ; said shafts being rotatably mounted on two supports (5 and 6) and each carrying a gear wheel (26) meshing with an endless screw (20 and 24) which is respectively secured to the supports (5 and 6) during their translatory motion along the guides (9 and 10) and keyed to a second shaft (23) parallel to the guides (9 and 10) of the same length ;
— two motors (11 and 12) for turning the first and the second shaft (22 and 23) to respectively set the base and convergence.

5. The device as claimed in claim 4, characterized in that the two devices for viewing are constituted by two cameras (1 and 4) each furnished with an objective (1 and 2) with a variable focal length and fixed respectively on the two vertical shafts (7 and 8), their optic axes being horizontal.

6. The device as claimed in claim 4, characterized in that the two viewing devices are constituted by two plane, vertical mirrors (38 and 39) symmetrically placed in relation to the plane of symmetry of the views and placed at an angle of 45° to this plane when the convergence is zero ;
and in that it furthermore comprises two cameras (30 and 31) which are fixed in relation to the plane of symmetry of the viewing directions and optically coupled to the mirrors (38 and 39), respectively.

7. The device as claimed in claim 1, characterized in that the device for the automatic control of the base and of the convergence comprises :
— a moving plane mirror (50) moved around a vertical axis by a motor (54) for setting convergence ;
— a support (51) sliding on two rectangular guides (55 and 56), carrying the motor (54) and the moving mirror (50), driven in translation by a shaft (57) provided with a screw thread and parallel to the guides (55 and 56) and having the same length ;
— a motor (53) driving the shaft (57) for setting the base ;
and in that it comprises a first and a second camera (43 and 44) fixed in relation to the guides (55 and 56), the first one photographing directly and the second one photographing via the moving mirror (50) and via a fixed return mirror (49) and parallel to the moving mirror (50) when convergence is zero.

8. The device as claimed in claim 4, characterized in that the two viewing devices comprise :
— a plane vertical mirror (63) and a dichroitic sheet (64) making an angle of 45° in relation to two viewing directions (67 and 68) when the convergence is zero and reflecting back the incident light in the same direction in the two viewing directions, the light reflected by the mirror (63) passing through the sheet (64) ;
and in that it comprises a single, fixed camera (66) receiving the light, which has been reflected by the mirror (63) and the dichroitic sheet (64), in a single objective (65).

**Patentansprüche**

1. Aufnahmevorrichtung für stereoskopische Bilder mit variabler Basis, wobei sie Mittel (1 bis 4) zur Bilderaufnahme aus einer ersten und einer zweiten Blickrichtung umfaßt, die um einen als Basis bezeichneten variablen Abstand B beabstandet sind, in zwei einen als Konvergenz bezeichneten Winkel bildenden Blickrichtungen, wobei diese Mittel umfassen :
— wenigstens ein Objektiv (1, 2) mit variabler Brennweite ;
— eine Vorrichtung (17) zur Steuerung des Objektivs (1, 2), um die Einstellung seiner Brennweite, den Abgleich seiner Einstellung und die Einstellung seiner Blende zu steuern ;
— eine Vorrichtung (7 bis 12) zur Nachregelung der Konvergenz und zur Nachregelung der Basis ;
— eine Vorrichtung (18) zur Steuerung der Nachregelungsvorrichtung (7 bis 12), um einen Konvergenz- und einen Basiswert zu bestimmen, in Abhängigkeit vom Abgleich der Objektiveinstellung (1, 2) ;
dadurch gekennzeichnet, daß die Vorrichtung zur Steuerung (18) der Nachregelungsvorrichtung (7 bis 12) den Konvergenz- und den Basiswert auch in Abhängigkeit von der Einstellung der Brennweite des Objektivs (1, 2) bestimmt, nach einem in einem Speicher (15, 16) gespeicherten vorbestimmten Gesetz, wobei der Wert des Abgleichs der Einstellung und der Wert der Einstellung für die Brennweite durch die Vorrichtung (17) zur Steuerung des Objektivs (1, 2) geliefert werden.

2. Vorrichtung nach Anspruch 1, dadurch gekennzeichnet, daß der Speicher (15, 16) für die Steuerungsvorrichtung (18) der Nachregelungsvorrichtung (7 bis 12) einen Festwertspeicher (15) umfaßt, für die Speicherung von : einem bekannten Gesetz, um eine Naturrelief-Wirkung erhalten zu können ; einem bekannten Gesetz, um eine Überrelief-Wirkung erhalten zu können ; und einem bekannten Gesetz, um eine Unterrelief-Wirkung erhalten zu können.

3. Vorrichtung nach Anspruch 1, dadurch gekennzeichnet, daß der Speicher (15, 16) der Vorrichtung (18) zur Steuerung der Nachregelungsvorrichtung (7 bis 12) ferner einen Arbeitsspeicher (16) umfaßt, um ein einer besonderen Wirkung entsprechendes Gesetz zu speichern, wobei dieses Gesetz durch eine manuelle Veränderung der Konvergenz und der Basis während einer Wiederholung festgelegt wird und wobei die Konvergenz- und Basiswerte, die den Werten eines der Abgleiche des Objektivs (1, 2) entsprechen, in diesem Arbeitsspeicher (16) eingeschrieben werden.

4. Vorrichtung nach Anspruch 1, dadurch gekennzeichnet, daß die Vorrichtung zur Nachregelung der Konvergenz und zur Nachregelung der Basis umfaßt :
— zwei Träger (5, 6), die in Führungen (9, 10) gleiten, welche waagerecht und senkrecht zu den beiden Blickrichtungen stehen, wenn die Konvergenz gleich Null ist, und welche in zwei entgegengesetzten Richtungen von zwei entgegengesetzten Gewindesteigungen angetrieben werden, die jeweils auf einer der zwei Hälften einer ersten Welle (22) gelegen sind, wobei diese Welle parallel zu den Führungen (9, 10) ist und dieselbe Länge wie diese aufweist ;
— zwei senkrechte Achsen (7, 8), die jeweils zwei Bilderaufnahmevorrichtungen (3, 4) tragen, wobei diese Achsen jeweils an den beiden Trägern (5, 6) drehbar gelagert sind und wobei jede Achse ein Zahnrad (26) trägt, das in eine endlose Schraube (20, 24) eingreift, welche jeweils mit den Trägern (5, 6) deren Translationsbewegung den Führungen (9, 10) entlang folgt und mit einer zweiten Welle (23), welche zu den Führungen (9, 10) parallel steht und dieselbe Länge aufweist, drehfest verbunden ist ;
— zwei Motoren (11, 12), die die erste und die zweite Welle (22, 23) antreiben, um die Basis bzw. die Konvergenz einzustellen.

5. Vorrichtung nach Anspruch 4, dadurch gekennzeichnet, daß die beiden Bilderaufnahmevorrichtungen aus zwei Kameras (1, 4) bestehen, die jeweils mit einem Objektiv (1, 2) mit variabler Brennweite versehen sind, welche jeweils auf einer der beiden senkrechten Achsen (7, 8) befestigt sind, wobei ihre optischen Achsen waagerecht sind.

6. Vorrichtung nach Anspruch 4, dadurch gekennzeichnet, daß die beiden Bilderaufnahmevorrichtungen aus zwei ebenen und senkrechten Spiegeln (38, 39) bestehen, die zu der Symmetrieebene der Bilder symmetrisch sind und einen Winkel von 45° mit dieser Ebene bilden, wenn die Konvergenz gleich Null ist ; und daß sie ferner zwei Kameras (30, 31) umfaßt, welche in Bezug auf die Führungen (9, 10) fest sind, in Bezug auf die Symmetrieebene der Blickrichtungen symmetrisch angeordnet sind und die jeweils mit den Spiegeln (38, 39) optisch gekoppelt sind.

7. Vorrichtung nach Anspruch 1, dadurch gekennzeichnet, daß die Vorrichtung zur Nachregelung der Basis und der Konvergenz umfaßt : einen beweglichen, ebenen, senkrechten Spiegel (50), der um eine senkrechte Achse durch einen Motor (54) bewegt wird, um die Konvergenz einzustellen ; einen in zwei geradlinigen Führungen (55 und 56) gleitenden Träger (51), der den Motor (54) und den beweglichen Spiegel (50) trägt, welcher mit einer Translationsbewegung durch eine Welle (57) angetrieben wird, die mit einer Gewindeschraube versehen ist, zu den Führungen (55, 56) parallel steht, und dieselbe Länge aufweist ;

—einen Motor (53), der die Welle (57) antreibt, um die Basis einzustellen ;

und daß sie eine erste und eine zweite Kamera (43, 44) umfaßt, welche in Bezug auf die Führungen (55, 56) fest sind, wobei die erste Kamera Bilder unmittelbar aufnimmt und die zweite Kamera über den beweglichen Spiegel (50) und über einen festen Umlenkspiegel (49), der parallel zu dem beweglichen Spiegel (50) steht, Bilder aufnimmt, wenn die Konvergenz gleich Null ist.

8. Vorrichtung nach Anspruch 4, dadurch gekennzeichnet, daß die beiden Bilderaufnahmevorrichtungen umfassen :

— einen Spiegel (63) und eine dichroitische Platte (64), die eben und senkrecht sind, einen Winkel von 45° in Bezug auf die beiden Blickrichtungen (67, 68) bilden, wenn die Konvergenz gleich Null ist, und die das aus den beiden Blickrichtungen empfangene Licht reflektieren, wobei das durch den Spiegel (63) reflektierte Licht die Platte (64) durchquert ;

und daß sie eine einzelne und feste Kamera (66) umfaßt, welche in einem einzelnen Objektiv (65) das von dem Spiegel (63) und von der dichroistischen Platte (64) reflektierte Licht empfängt.

Fig.1

Fig.2

Fig.3

Fig.4

Fig.5

Fig.6